# EUROPEAN PATENT APPLICATION

(11) **EP 2 800 082 A2**
(43) Date of publication of application: **05.11.2014**
(21) Application number: 14164639.8
(22) Date of filing: 14.04.2014
(51) Int. Cl.: G08G 5/02, G08G 5/00

(54) **Methods and apparatus for determining and using a landing surface friction condition**

(30) Priority: 29.04.2013 US 201361817241 P; 24.03.2014 US 201414223579
(71) Applicant: Honeywell International Inc., Morristown, NJ 07962-2245 (US)
(72) Inventor: Enns, Dale Frederick, Morristown, NJ New Jersey 07962-2245 (US); Ishihara, Yasuo, Morristown, NJ New Jersey 07962-2245 (US); Kauffman, Donald Carl, Morristown, NJ New Jersey 07962-2245 (US); Jongsma, Kenneth R., Morristown, NJ New Jersey 07962-2245 (US); Haissig, Christine Marie, Morristown, NJ New Jersey 07962-2245 (US)
(74) Representative: Houghton, Mark Phillip

(57) **Abstract**

A diagnostic method performed onboard an aircraft is provided. The method obtains aircraft state data during landing of the aircraft, via a plurality of avionics and aircraft systems; and determines a landing surface friction condition based on the aircraft state data, using at least one of the plurality of avionics and aircraft systems. A method of evaluating landing surface data onboard an aircraft is also provided. The method receives landing surface friction condition data, prior to landing; computes a required landing distance, based on the received landing surface friction condition data; and when the required landing distance is more than a predetermined threshold, performs a designated task.

## Description

### CROSS-REFERENCE TO RELATED APPLICATION(S)

This application claims the benefit of United States provisional patent application serial number 61/817,241, filed April 29, 2013.

### TECHNICAL FIELD

Embodiments of the subject matter described herein relate generally to determining a landing surface friction condition in real-time, and more particularly, embodiments of the subject matter relate to determining the landing surface friction condition onboard an aircraft and transmitting the determined data.

### BACKGROUND

Landing surface friction conditions can greatly impact the safe landing of aircraft. Flight crew members utilize information about landing surface friction to calculate whether they have a sufficiently low energy state, including speed of the aircraft and height of the aircraft position above the landing surface, to come to a safe stop before the end of the usable portion of the landing surface (e.g., before the end of a runway). This information is currently reported verbally by flight crew members during landing, but is rather subjective in nature and, thus, is subject to human variability. Further, a landing surface friction condition reported by a flight crew member for one aircraft may not apply to a different aircraft. In addition, a verbal report of the friction condition of a landing surface is generally reported to a third party, which is responsible for relaying the information to other aircraft in the area prior to landing. This process introduces unnecessary latency into the process of acquiring the information, from the perspective of a flight crew member approaching the landing surface or an airport authority making a decision to close a runway.

Accordingly, it is desirable to provide a consistent method for determining a landing surface friction condition. In addition, it is desirable to relay this information to other aircraft in the area without introducing unnecessary latency in the process. Furthermore, other desirable features and characteristics will become apparent from the subsequent detailed description and the appended claims, taken in conjunction with the accompanying drawings and the foregoing technical field and background.

### BRIEF SUMMARY

Some embodiments provide a diagnostic method performed onboard an aircraft. The method obtains aircraft state data during landing of the aircraft, via a plurality of avionics and aircraft systems; and determines a landing surface friction condition based on the aircraft state data, using at least one of the plurality of avionics and aircraft systems.

Some embodiments provide a diagnostic system onboard an aircraft. The system includes system memory; a plurality of avionics and flight systems, configured to determine aircraft state data; and processing logic, configured to retrieve the aircraft state data from the plurality of avionics and flight systems; calculate a thrust value, a drag value, a lift value, and a wheel brake force value, based on the aircraft state data; and compute a landing surface friction condition, based on the thrust value, the drag value, the lift value, and the wheel brake force value.

Some embodiments provide a non-transitory, computer-readable medium onboard an aircraft, containing instructions thereon, which, when executed by a processor during landing of the aircraft, perform a method. The method receives status information from a plurality of avionics and flight systems; determines a current friction condition for a landing surface, based on the received status information; and broadcasts the determined current friction condition within a defined geographic area using a communication protocol accessible to a plurality of aircraft in the defined geographic area.

Some embodiments provide a method of evaluating landing surface data onboard an aircraft. The method receives landing surface friction condition data, prior to landing; computes a required landing distance, based on the received landing surface friction condition data; and when the required landing distance is more than a predetermined threshold, performs a designated task.

This summary is provided to introduce a selection of concepts in a simplified form that are further described below in the detailed description. This summary is not intended to identify key features or essential features of the claimed subject matter, nor is it intended to be used as an aid in determining the scope of the claimed subject matter.

### BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.
FIG. 1 is a diagram of a table correlating typical ranges of friction coefficients to applicable surface condition detail and appropriate braking action, in accordance with an embodiment;
FIG. 2 is a functional block diagram of an aircraft including a landing surface friction analysis system, in accordance with an embodiment;
FIG. 3 is a flowchart that illustrates an embodiment of a process for determining, onboard an aircraft, a landing surface friction condition, and transmitting the landing surface friction condition within wireless range;
FIG. 4 is a flowchart that illustrates an embodiment of a process for calculating a landing surface friction condition based on aircraft state data;
FIG. 5 is a schematic representation of a plurality of avionics and aircraft systems, relevant data contributed by each, and applicable calculations, in accordance with an embodiment; and
FIG. 6 is a flowchart that illustrates an embodiment of a process for responding when a landing surface is shorter than a required landing distance, based on the landing surface friction condition.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, brief summary or the following detailed description.

The subject matter presented herein relates to methods and apparatus used to determine and use a landing surface friction condition onboard an aircraft. Within the context of this patent application, methods and apparatus for determining a landing surface friction condition, and methods and apparatus for using a landing surface friction condition, are described as two separate implementations. In accordance with a first implementation, a landing surface friction condition is determined onboard an aircraft during landing, using data retrieved from various avionics and aircraft systems. The landing surface friction condition is then transmitted to another party for use. In accordance with a second implementation, a transmitted landing surface friction condition is received and used to calculate a required landing distance for a particular aircraft, and to respond based on an available landing distance for an applicable landing surface.

For purposes of explanation, a landing surface may include any surface that an aircraft uses for landing purposes. In certain embodiments, a landing surface may be a runway or other officially designated area for landing and/or takeoff of aircraft. In some embodiments, a landing surface may be a subset of an officially designated area for landing and/or takeoff (e.g., a usable portion of a runway). In other embodiments, a landing surface may include any area used and/or usable by an aircraft for takeoff and/or landing purposes.

A landing surface friction condition may be defined as a friction level of a landing surface that corresponds to a range of friction coefficients, where a friction coefficient is the ratio of the friction force to normal force on a landing surface. Friction force is the force of the landing surface acting on the aircraft, parallel to the landing surface, and in the opposite direction of the aircraft velocity. While a friction coefficient is a continuous variable with infinite potential values, the landing surface friction condition is a discrete variable with a finite number of levels. Each level of a landing surface friction condition is associated with a qualitative name that is descriptive of the landing surface friction condition.

The landing surface friction condition may be affected by precipitation or other substances present on the landing surface which may affect the time and/or braking effort required to land an aircraft using standard equipment. In certain embodiments, the landing surface friction condition is determined and then broadcast to other aircraft or ground personnel within wireless communication range. In some embodiments, a determined landing surface friction condition is received by an aircraft, which is then capable of calculating a required landing distance and taking other appropriate actions based on the required landing distance.

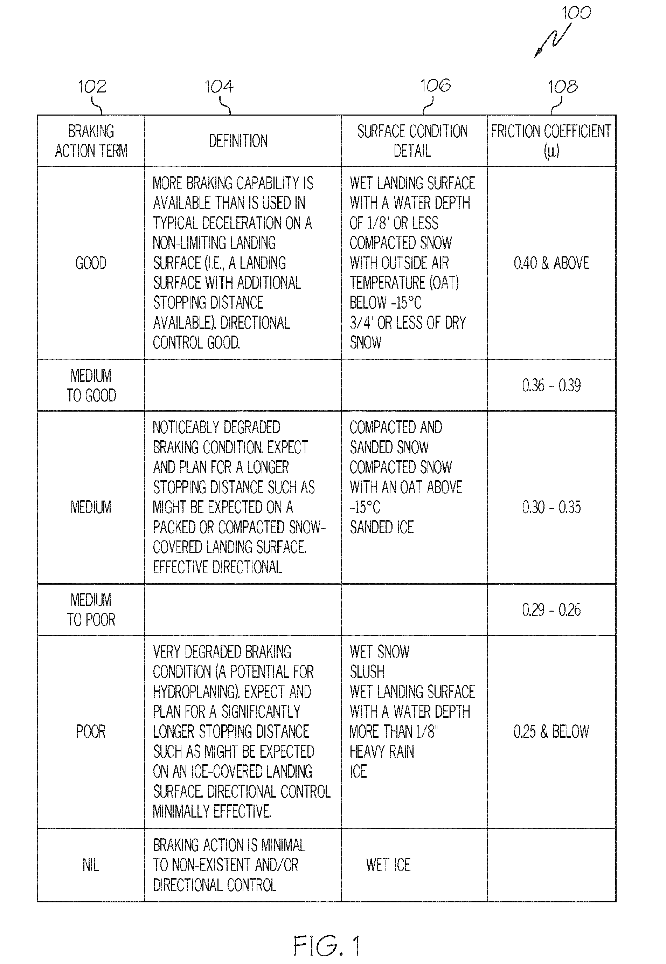

Referring now to the drawings, FIG. 1 (see *FAA Advisory Circular 91-79,* reproduced in relevant part, and incorporated by reference herein) is a diagram of a table 100 correlating ranges of friction coefficients 108 to applicable surface condition detail 106 and appropriate braking action 102, in accordance with an embodiment. Table 100 provides additional detail regarding the relationship between observed and/or determined parameters, which may include a friction coefficient (µ) 108 or a certain level of braking action 102, and applicable surface condition detail 106.

A landing surface friction condition is of interest to air traffic control, flight crew members of subsequent landing aircraft, and airport personnel, such as the airport manager and maintenance control. Generally, flight crew members verbally report the landing surface friction condition in terms of the quality of braking action 102 observed by the flight crew member during landing, which is expressed as Good, Medium (i.e., Fair), Poor, or Nil, or combinations of those terms. For example, a flight crew member may observe "Good" braking action during landing, and may verbally report this to airport personnel. According to the embodiment illustrated using table 100, the airport personnel receiving the information interpret the "Good" braking action to indicate a landing surface friction condition with a lower bound (or worst case scenario) including: a wet landing surface with a water depth of 1/8" or less, compacted snow with an outside air temperature (OAT) below -15°C, or ¾" or less of dry snow. The landing surface friction condition indicated by the "Good" braking action may be further defined, or in other words, reference a definition 104 including: more braking capability is available than is used in typical deceleration on a non-limiting landing surface (i.e., a landing surface with additional stopping distance available), and that directional control is good.

In addition to the reporting by flight crew members during landing, airport operations and maintenance personnel may report a landing surface friction condition in terms of the friction coefficient (µ) 108, which is determined using landing surface friction measurements obtained from equipment on the landing surface. For example, airport personnel may record a determined friction coefficient (µ) 108 of 0.45, which, according to the embodiment illustrated in table 100, indicates the same surface condition detail 106 as the observed "Good" braking action: a landing surface friction condition with a lower bound (or worst case scenario) including a wet landing surface with a water depth of 1/8" or less, compacted snow with OAT below -15°C, or ¾" or less of dry snow.

As shown by the above examples and discussion, landing surface friction condition reporting based on observed braking action 102 and/or based on a calculated friction coefficient 108, provides data that is readily available for other aircraft, but not the aircraft that is currently landing and performing the observations. In addition, landing surface friction condition reporting based on equipment on the landing surface is not practically deployable when the landing surface is in use.

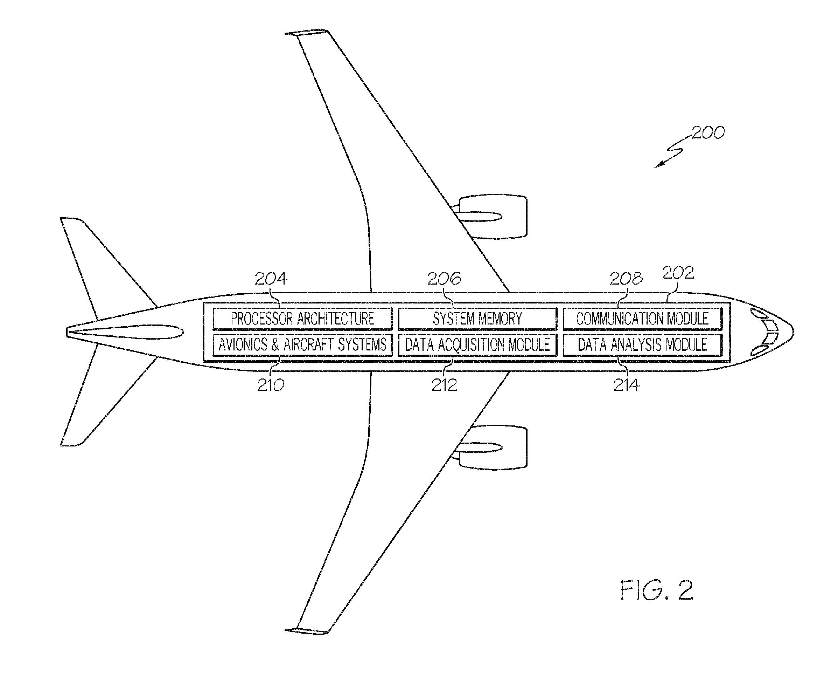

FIG. 2 is a functional block diagram of an aircraft 200 including a landing surface friction analysis system 202, in accordance with an embodiment. The aircraft 200 may be any aircraft that includes the avionics and aircraft systems 210, as described below, which provide the requisite aircraft state data. Alternatively, the aircraft 200 can be any aircraft suitably configured to obtain the requisite aircraft state data for analyzing and determining, onboard the aircraft 200, a landing surface friction condition. A landing surface friction condition may be defined as a friction level of a landing surface that corresponds to a range of friction coefficients, where a friction coefficient is the ratio of the friction force to normal force on a landing surface. The landing surface friction condition may be affected by precipitation or other substances present on the landing surface which may affect the time and/or braking effort required to land the aircraft 200 using standard equipment. Precipitation or other substances may include, without limitation: water, ice, slush, snow, and/or other substances present on the runway which affect the level of friction between the wheels of the aircraft 200 and the pavement of the landing surface.

As depicted, the landing surface friction analysis system 202 includes, without limitation, a processor architecture 204; a system memory 206; a communication module 208; avionics and aircraft systems 210; a data acquisition module 212; and a data analysis module 214. These elements and features of the landing surface friction analysis system 202 may be operatively associated with one another, coupled to one another, or otherwise configured to cooperate with one another as needed to support the desired functionality-in particular, determining a landing surface friction condition during landing, as described herein. For ease of illustration and clarity, the various physical, electrical, and logical couplings and interconnections for these elements and features are not depicted in FIG. 2. Moreover, it should be appreciated that embodiments of the landing surface friction analysis system 202 will include other elements, modules, and features that cooperate to support the desired functionality. For simplicity, FIG. 2 only depicts certain elements that relate to the techniques described in more detail below.

The processor architecture 204 may be implemented or performed with one or more general purpose processors, a content addressable memory, a digital signal processor, an application specific integrated circuit, a field programmable gate array, any suitable programmable logic device, discrete gate or transistor logic, discrete hardware components, or any combination designed to perform the functions described here. In particular, the processor architecture 204 may be realized as one or more microprocessors, controllers, microcontrollers, or state machines. Moreover, the processor architecture 204 may be implemented as a combination of computing devices, e.g., a combination of digital signal processors and microprocessors, a plurality of microprocessors, one or more microprocessors in conjunction with a digital signal processor core, or any other such configuration.

The system memory 206 may be realized using any number of devices, components, or modules, as appropriate to the embodiment. Moreover, the landing surface friction analysis system 202 could include system memory 206 integrated therein and/or system memory 206 operatively coupled thereto, as appropriate to the particular embodiment. In practice, the system memory 206 could be realized as RAM memory, flash memory, EPROM memory, EEPROM memory, registers, a hard disk, a removable disk, or any other form of storage medium known in the art. In certain embodiments, the system memory 206 includes a hard disk, which may also be used to support functions of the landing surface friction analysis system 202. The system memory 206 can be coupled to the processor architecture 204 such that the processor architecture 204 can read information from, and write information to, the system memory 206. In the alternative, the system memory 206 may be integral to the processor architecture 204. As an example, the processor architecture 204 and the system memory 206 may reside in a suitably designed application-specific integrated circuit (ASIC).

The communication module 208 is suitably configured to establish a connection and communicate data between the aircraft 200 (and, more specifically, the landing surface friction analysis system 202) and other communication devices within range that use the same communication protocol. In certain embodiments, the communication module is implemented using automatic dependent surveillance-broadcast (ADS-B) datalink technology. ADS-B is a datalink that is used to broadcast information such as aircraft position, velocity, and other information to other aircraft or ground users that have the capability to receive ADS-B messages. The capability to broadcast ADS-B messages is known as ADS-B Out, while the capability to receive and process ADS-B messages is known as ADS-B In. There is no per message charge to send or receive ADS-B messages, unlike datalink services such as the Aircraft Communications Addressing and Reporting System (ACARS). ADS-B messages are received within milliseconds since they are communicated directly and not through another communications network, thereby providing low levels of latency. ADS-B messages can be received from 10 nautical miles (NM) to 100 NM from the airport, depending on the number of aircraft in the area and the type of ADS-B equipment installed. Typical ranges are 30 NM, which is well before aircraft are on final approach and preparing for landing. In other embodiments, the communication module 208 is implemented using another communication technology onboard the aircraft 200, including, without limitation: transponder/interrogator communications, radio communications, or the like.

In certain embodiments, the communication module 208 periodically broadcasts information about the aircraft 200, such as identification, current position, altitude, and velocity, through an onboard transmitter. In some embodiments, however, the communication module 208 transmits broadcast messages (including a landing surface friction condition) once landing surface friction analysis is complete. In this case, transmission of the broadcast message is triggered by an event (e.g., the completion of landing surface friction calculations), rather than automatically transmitting the data according to a schedule. Generally, the communication module 208 receives a set of broadcast data from the data analysis module 214, including at least a landing surface friction condition, and broadcasts the set of broadcast data within a defined broadcast (e.g., geographic) area. Additional data provided by the communication module 208 may include, without limitation, an identifier for the model of the aircraft 200, an identifier for a particular runway or other landing surface associated with a computed landing surface friction condition, and the like. Data received by the communication module 208 may include direct communication from nearby aircraft, such as landing surface friction analysis data.

The avionics and aircraft systems 210 are suitably configured to perform individual functions related to flight, landing, and operation of the aircraft 200. Generally, as applied to the landing surface friction analysis system 202, the avionics and aircraft systems 210 are existing systems which, in addition to carrying out its primary purpose, are suitably configured to provide aircraft state data, or in other words, the status and/or settings of the aircraft with regard to each flight system. The avionics and aircraft systems 210 may include communications systems, navigation systems, flight data systems, display systems, or the like. More specifically, the avionics and aircraft systems may include, without limitation: a flight control module (FCM); flight management system (FMS); full authority digital engine control (FADEC); inertial reference system and global positioning system (IRS/GPS); air data system (ADS); a braking system, such as an automatic braking system (ABS); or the like.

The data acquisition module 212 is suitably configured to receive various data required for use within the landing surface friction analysis system 202. The data acquisition module 212 receives and/or retrieves aircraft status data from the avionics and aircraft systems 210, and receives known parameter and/or constant value data, from system memory. Aircraft status data may include, without limitation: a flap setting, a spoiler setting, an angle of attack, an engine rotor speed, a throttle setting, a reverser setting, an acceleration value, an air speed value, and a braking input value. Known parameters may include, without limitation: an aircraft weight value, an aircraft mass value, a wing area, a gravitational acceleration value, and an air density value.

The data acquisition module 212 retrieves applicable data (e.g., known parameters) from system memory 206. In certain embodiments, the data acquisition module 212 receives required data from the relevant avionics and aircraft systems 210, which may be in response to a transmitted request or at timed intervals. In some embodiments, data is transmitted from relevant avionics and aircraft systems 210 via a data bus, according to a fixed schedule. In this case, the data acquisition module 212 retrieves the required data from the data bus.

The data analysis module 214 is suitably configured to perform calculations to determine, using the data acquired by the data acquisition module 212, a landing surface friction condition during landing of the aircraft 200. In practice, the data analysis module 214 may be implemented with (or cooperate with) the processor architecture 204 to perform at least some of the functions and operations described in more detail herein. In this regard, the data analysis module 214 may be realized as suitably written processing logic, application program code, or the like. The data analysis module 214 is configured to activate during landing of the aircraft 200. Generally, the landing surface friction analysis system 202 is aware that the aircraft 200 is landing, through recognition of landing gear extension, active braking, or a change in a current condition (e.g., the placement of weight on aircraft wheels, landing gear status, airspeeds, and/or other applicable input). Alternatively, the landing surface friction analysis system 202 may recognize that one or more systems may be in "approach mode". In certain embodiments, the data analysis module and data acquisition module may include processing logic executed by one of the avionics and aircraft systems already resident on the aircraft 200. In some embodiments, the data analysis module and data acquisition module may include processing logic executed by a newly-introduced processor architecture 204 and/or other hardware device used for purposes of determining a landing surface friction condition.

Once activated by initiation of the landing, the data analysis module 214 is configured to receive data (e.g., aircraft status data and known parameter and/or constant value data) via the data acquisition module 212. The data analysis module 214 utilizes the received data to perform calculations which "balance the forces" according to Newton's Second Law (*F* = *ma*). The data analysis module 214 solves the equations for unknown values using known equations to produce values for thrust, drag, lift, and wheel brake force, and produces a calculated friction coefficient for the landing surface currently in use during landing. The data analysis module 214 is then capable of using the calculated friction coefficient, in combination with other received data, to determine an applicable landing surface friction condition. In certain embodiments, the data analysis module 214 performs a lookup in system memory 206, using the calculated friction coefficient and an input braking value to obtain a landing surface friction condition. In some embodiments, the data analysis module 214 may perform a lookup using the calculated friction coefficient alone or in combination with any other relevant data, to obtain a landing surface friction condition. The data analysis module 214 is further configured to internally transmit data, including the obtained landing surface friction condition and/or a calculated friction coefficient, to the communication module 208 for further transmission outside the aircraft 200. Generally, this external transmission includes a wireless communication, such as a broadcast, to nearby aircraft, tower, and/or other recipients utilizing a compatible communication protocol within range of the transmission.

### Determination of Landing Surface Friction Condition

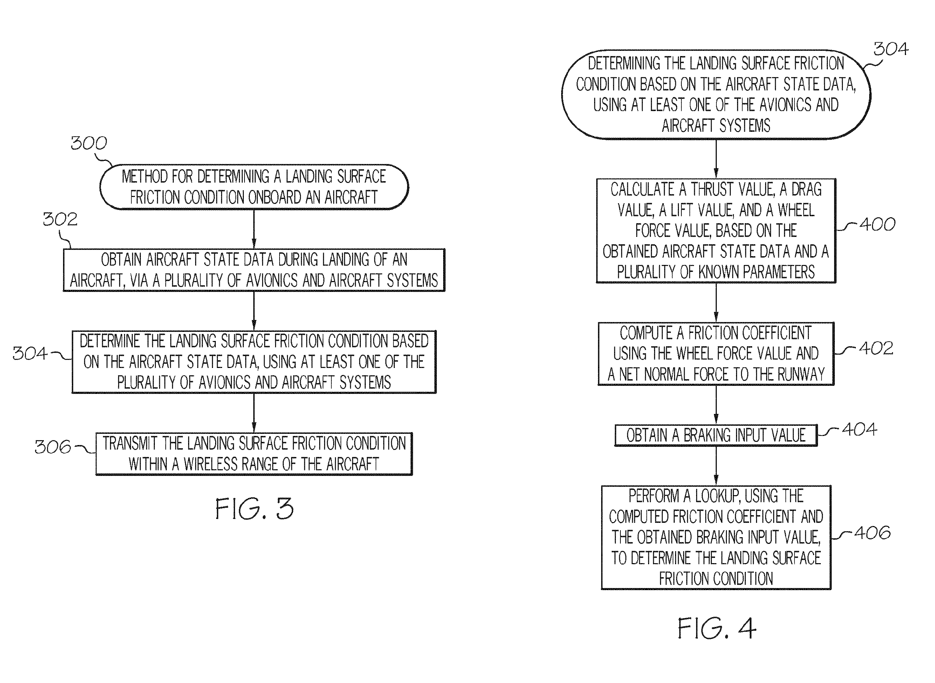

FIG. 3 is a flowchart that illustrates an embodiment of a process 300 for determining, onboard an aircraft, a landing surface friction condition, and transmitting the landing surface friction condition within wireless range of the aircraft. The various tasks performed in connection with process 300 may be performed by software, hardware, firmware, or any combination thereof. For illustrative purposes, the following description of process 300 may refer to elements mentioned above in connection with FIGS. 1-2. In practice, portions of process 300 may be performed by different elements of the described system. It should be appreciated that process 300 may include any number of additional or alternative tasks, the tasks shown in FIG. 3 need not be performed in the illustrated order, and process 300 may be incorporated into a more comprehensive procedure or process having additional functionality not described in detail herein. Moreover, one or more of the tasks shown in FIG. 3 could be omitted from an embodiment of the process 300 as long as the intended overall functionality remains intact.

For ease of description and clarity, this example assumes that the process 300 begins when aircraft state data is obtained, via a plurality of avionics and aircraft systems, during landing of an aircraft on a landing surface (step 302). The plurality of avionics and aircraft systems may include, without limitation: a flight control module (FCM), a flight management system (FMS), a full authority digital engine control (FADEC), an inertial reference system and global positioning system (IRS/GPS), an air data system (ADS), an automatic braking system (ABS), or any other sensor, processing hardware, and/or flight system capable of acquiring data relevant to the determination of a landing surface friction condition, as described herein. Relevant data may include, without limitation: a flap setting, a spoiler setting, an angle of attack, the mass of the aircraft, an engine rotor speed, a throttle setting, a reverser setting, an acceleration of the aircraft, an air speed, an air density, a braking input value for the aircraft, or any other setting, parameter, input and/or output value, with which a landing surface friction condition may be calculated and determined.

Generally, the process 300 retrieves appropriate data by communicating with the plurality of avionics and aircraft systems via one or more communication buses. More specifically, the data is obtained via sensors associated with the avionics and aircraft systems components. This sensor data is sampled at regular intervals and converted to digital data that is loaded on one or more data buses. An example is the Avionics Standard Communications Bus (ASCB). The process 300 then reads the data from the one or more data buses.

After obtaining the aircraft state data during landing (step 302), the process 300 determines a landing surface friction condition based on the aircraft state data, using at least one of the plurality of avionics and aircraft systems (step 304). In certain embodiments, the landing surface friction condition is determined using at least one of the existing plurality of avionics and aircraft systems already resident onboard the aircraft. In some embodiments, the process 300 is executed by a newly-introduced device, which may include hardware and/or processing logic used solely for the purpose of carrying out the process 300. Further, the landing surface friction condition is calculated completely onboard the aircraft, without receiving or using data and/or resources external to the aircraft to complete the process 300.

The process 300 determines a landing surface friction condition, or in other words, determines a friction level of a landing surface that corresponds to a range of friction coefficients, where a friction coefficient is the ratio of the friction force to normal force on a landing surface. As described in more detail with regard to FIG. 4, the process 300 calculates a landing surface friction condition using calculated values for thrust, drag, lift, and wheel brake force, and applying them to Newton's Second Law (*F*= *ma*). The process 300 utilizes values generated in these calculations to compute a friction coefficient, which is then used to determine a landing surface friction condition. In certain embodiments, the landing surface friction condition is determined using the ranges of friction coefficient values shown in FIG. 1. In certain embodiments, the landing surface friction condition may be calculated using one or more discrete values. In some embodiments, the landing surface friction condition may be calculated using a plurality of continuous values.

Once the landing surface friction condition has been determined (step 304), the process 300 initiates a transmission of the landing surface friction condition within wireless range of the aircraft for a time period of interest (step 306). In certain embodiments, the transmission is receivable by one or more devices in wireless range that use the same communication protocol. In certain embodiments, the transmission is communicated via broadcast, using automatic dependent surveillance broadcast (ADS-B) datalink technology, and is received by other nearby aircraft, air traffic control, and/or any other personnel equipped with the ability to receive ADS-B messages. In some embodiments the transmission is communicated in response to a request from another party. For example, the transmission may be communicated using a transponder in response to a radio-frequency interrogation from another party. Other parties requesting and/or receiving the landing surface friction condition data may include, without limitation: ground vehicles, air traffic control, airport authorities, and/or any party with a compatible communication receiver.

The time period of interest refers to a limited window of time for which the calculated landing surface friction condition is transmitted for use. Generally, the broadcast is transmitted upon completion of the calculations to determine the landing surface friction condition (step 304), and this occurs during the landing process. The broadcast continues long enough for other aircraft and ground personnel to receive the message with a high probability of reception. The receiving aircraft (and other personnel with equipment using a compatible communication protocol) receives the landing surface friction condition directly from the aircraft performing the calculation. Here, the process 300 performs calculations to determine a landing surface friction condition onboard an aircraft in near real-time. Latency is reduced because the process 300 does not adhere to the customary practice of transmitting data to a third party (e.g., an air traffic control tower) for further calculation to determine the landing surface friction condition. The process 300 also transmits the landing surface friction condition directly from the aircraft performing the calculations to an end-user (e.g., nearby aircraft preparing to land). Latency is further reduced by eliminating the time required for the incomplete friction data to be communicated from the aircraft to a third party (where the calculations are then performed), and the time required to transmit the determined landing surface friction condition from the third party to the end-user.

FIG. 4 is a flowchart that illustrates an embodiment of a process 304 for calculating a landing surface friction condition based on aircraft state data. It should be appreciated that the process 304 described in FIG. 4 represents a more detailed view of step 304 described above in the discussion of FIG. 3. First, the process 304 calculates a plurality of forces, or in other words, the process 304 determines a thrust value (T), a drag value (D), a lift value (L), and a wheel brake force value (B), based on the obtained aircraft state data and a plurality of known parameters (step 400).

The thrust value (T) is determined by obtaining values for an engine rotor speed (N₁), an air speed (*V*), an air density (*ρ*), a throttle setting (δₜₕᵣₒₜₜₗₑ), and a reverser setting (δᵣₑᵥₑᵣₛₑᵣ) and applying a Thrust Model equation: *T* = *T*(*N*₁, *V*, *ρ, δₜₕᵣₒₜₜₗₑ*, *δᵣₑᵥₑᵣₛₑᵣ*). Here, the process 304 performs a lookup, using the obtained data values, to determine an appropriate thrust value.

The drag value (D) is determined by applying a Drag Model equation: *D* = 0.5*ρV²SC_{D}*(*δ_{flap}, δₛₚₒᵢₗₑᵣ, α*). Here, a drag coefficient (C_{D}) is obtained by performing a lookup using a flap setting (δ_{flap}), a spoiler setting (δₛₚₒᵢₗₑᵣ), and an angle of attack (α), which are obtained from relevant avionics and aircraft systems. When the drag coefficient (C_{D}) has been obtained, it is used in conjunction with the air density (*ρ*), air speed (*V*), and wing area (*S*) to calculate the drag value using the Drag Model equation.

The lift value (L) is determined by applying a Lift Model equation: *L* = 0.5*ρV*²*SC_{L}*(*δ_{flap}*,*δₛₚₒᵢₗₑᵣ*,*α*). Here, a lift coefficient (C_{L}) is obtained by performing a lookup using a flap setting (δ_{flap}), a spoiler setting (δₛₚₒᵢₗₑᵣ), and an angle of attack (α), which are obtained from relevant avionics and aircraft systems. When the lift coefficient (C_{L}) has been obtained, it is used in conjunction with the air density (*ρ*), air speed (*V*), and wing area (*S*) to calculate the lift value using the Lift Model equation.

The wheel brake force value (B) is calculated using the determined thrust value (T) and drag value (D) and applying these values to Newton's Second Law, which states that force (F) equals the product of mass (m) and acceleration (a), or *F* = *ma.* Here, the sum of the forces (*F*) equals the thrust value (T) minus the drag value (D) minus the wheel brake force value (B), or in other words, *F* = *T - D - B* = *ma*. Solving the equation provides a wheel brake force value (B) for use in further calculations.

After calculating a thrust value (T), a drag value (D), a lift value (L), and a wheel brake force value (B) (step 400), the process 304 computes a friction coefficient (µ) using the wheel brake force value (B) and a net normal force to the landing surface (step 402). The net normal force equals the weight of the aircraft offset by the lift value (L). The wheel brake force value (B) is equal to the net normal force multiplied by a friction coefficient (µ), in accordance with the equation: *B =* (*mg - L*)*µ*(*δ_{b},c*_{*runwa*y}). Using the previously calculated values for wheel brake force (B) and lift (L), the process 304 calculates the previously unknown friction coefficient value (µ).

The friction coefficient value (µ) varies between a minimum (indicating no input braking action) and a maximum (indicating full input braking action), depending on the braking input value (δ_{b}). The braking input value (δ_{b}) is a quantitative assessment of how much pressure is being applied at the wheel-drums. Generally, an automatic braking system (ABS) in an aircraft may be set to low, medium, or high, but the maximum value for the friction coefficient (µ) is limited by the condition in which the wheels begin to slip and static friction decreases to dynamic friction. Exemplary ranges for a friction coefficient value (µ), and correlated landing surface friction conditions are presented with regard to FIG. 1.

Next, the process 304 obtains a braking input value (δ_{b}) (step 404). In certain embodiments, the braking input value (δ_{b}) is obtained via an automatic braking system (ABS). It should be appreciated that the braking input value (δ_{b}) may be obtained using any available braking system and/or sensor(s) or processor(s) in communication with a braking system on an aircraft.

Once the friction coefficient (µ) has been calculated (step 402) and the braking input value (δ_{b}) has been obtained (step 404), the process 304 performs a lookup, using these values, to determine the landing surface friction condition (step 406). Because the friction coefficient (µ) is determined by the condition of the landing surface (i.e., landing surface friction condition) and the current amount of braking pressure being placed on the wheel-drums (i.e., braking input value (δ_{b})), an unknown landing surface friction condition may be determined using known values for the friction coefficient (µ) and the braking input value (δ_{b}). The process 304 performs a lookup, using the friction coefficient (µ) and the input braking value (δ_{b}), to obtain an estimate of landing surface friction condition. As discussed with regard to FIG. 1, the friction coefficient value (µ) and the braking input value (δ_{b}) each correlate to a landing surface friction condition. In certain embodiments, applicable data is stored in system memory, and step 406 is performed using this data. In some embodiments, applicable data may be stored locally, at the one of the plurality of avionics and aircraft systems responsible for executing process 304.

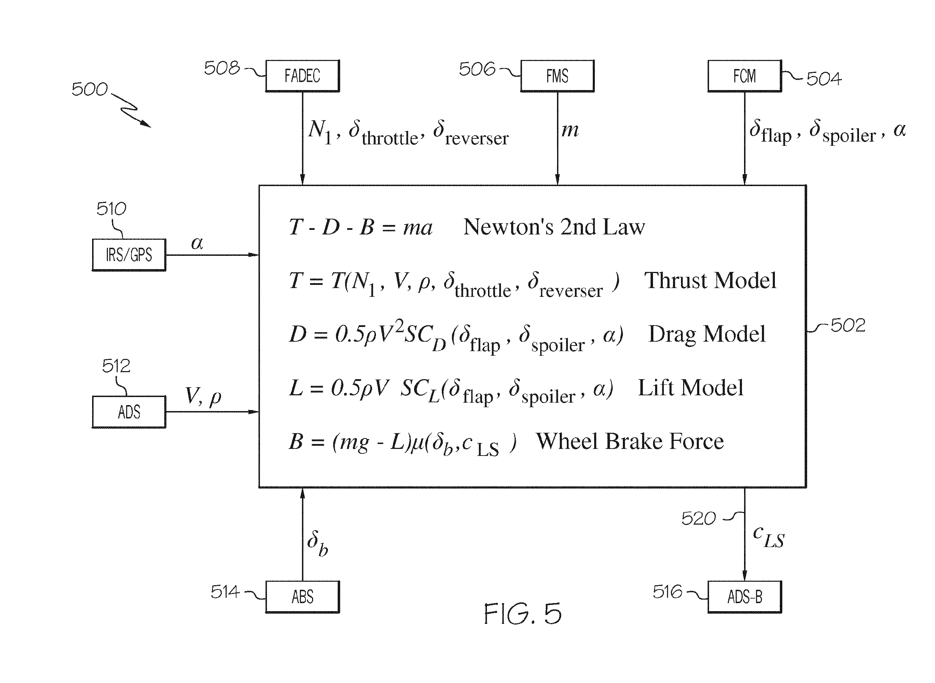

FIG. 5 is a diagram illustrating an embodiment of a landing surface friction analysis system 500 (shown as system 202 in FIG. 2) for determining a landing surface friction condition, in real-time, during landing of an aircraft. In this regard, the system 500 shows certain elements and components of the landing surface friction analysis system 202 in more detail. As shown, particular avionics and aircraft systems provide specific data to a landing surface friction analysis module 502.

Each of the avionics and aircraft systems provides the landing surface friction analysis module 502 with specific aircraft state data, settings, parameters, and the like, or receives a determined landing surface friction condition from the landing surface friction analysis module 502. As shown, a flight control module (FCM) 504 provides the landing surface friction analysis module 502 with a flap setting (δ_{flap}), a spoiler setting (δₛₚₒᵢₗₑᵣ), and an angle of attack (α), for the aircraft. The flight management system (FMS) 506 provides the landing surface friction analysis module 502 with the mass (*m*) of the aircraft. The full authority digital engine control (FADEC) 508 provides an engine rotor speed (N₁), a throttle setting (δₜₕᵣₒₜₜₗₑ), and a reverser setting (δᵣₑᵥₑᵣₛₑᵣ), while the inertial reference system and global positioning system (IRS/GPS) 510 provides the acceleration (*a*) of the aircraft. The air data system (ADS) 512 provides an air speed (*V*) and an air density (*ρ*) for the aircraft. The automatic braking system (ABS) 514 provides a braking input value (δ_{b}) for the aircraft.

The landing surface friction analysis module 502 receives these input values and performs calculations to obtain a balance of forces, according to Newton's Second Law (*F* = *ma* = *T - D* - *B*), and the appropriate thrust model, drag model, and lift model equations, as shown. Using the known values for thrust (T), drag (D), lift (L), and wheel brake force (B), a value for the unknown friction coefficient (µ) is calculated. Using the calculated friction coefficient (µ) and the input braking value (δ_{b}), the landing surface friction condition (C_{LS}) 520 is determined. Generally, the landing surface friction condition (C_{LS}) 520 is obtained by table lookup using the calculated friction coefficient (µ) and the obtained braking input value (δ_{b}).

After the calculations have been performed and a landing surface friction condition (C_{LS}) 520 has been determined, the landing surface friction analysis system 500 transmits the landing surface friction condition (C_{LS}) 520 (and any other applicable data) to nearby aircraft and other recipients utilizing the same communication protocol. Here, the landing surface friction condition (C_{LS}) 520 is broadcast by an automatic dependent surveillance-broadcast (ADS-B) system 516 to recipients that are also using ADS-B datalink technology. In other embodiments (not shown), the landing surface friction condition (C_{LS}) 520 may be transmitted using other applicable communication technology.

A transmitted landing surface friction condition (C_{LS}) 520 may include any data corresponding to the calculated parameters, as described above with respect to the table in FIG. 1. In certain embodiments, such corresponding data may include, without limitation: an applicable braking action, a discrete level of friction, a friction coefficient, a definition or further explanation of required braking action and/or descriptive detail for a surface condition. In other embodiments, continuous values for braking action(s), friction coefficient(s), or the like, may be transmitted.

A landing surface friction condition (C_{LS}) 520 may include, but is not limited to, the exemplary embodiment presented in FIG. 1. For example, one of the six presented braking actions may be transmitted. In another example, a combination of required braking actions may be transmitted. In still other examples, a braking action may include other data and/or other detail applicable to braking of an aircraft (e.g., data not displayed in FIG. 1). Other exemplary embodiments include friction coefficient data and any applicable combination of braking action, friction coefficient, and/or detail data. Varying combination(s) of discrete and continuous data may be transmitted.

### Use of Lading Surface Friction Condition

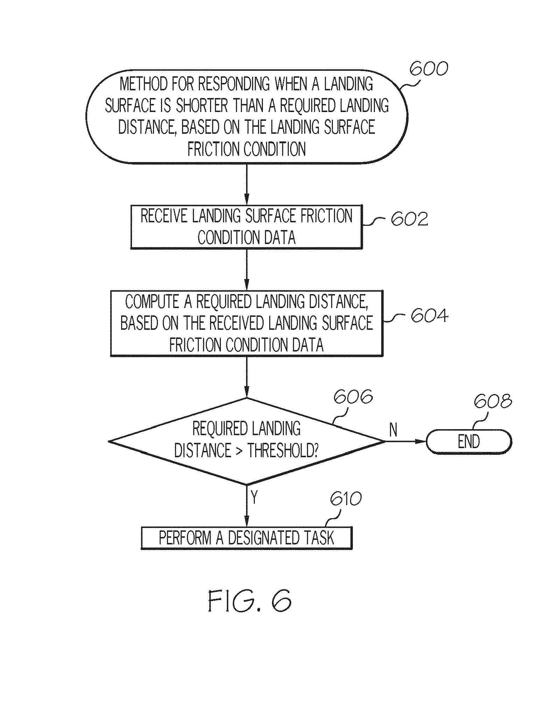

FIG. 6 is a flowchart that illustrates an embodiment of a process 600 for responding when a landing surface is shorter than a required landing distance, based on the landing surface friction condition. First, the process 600 receives landing surface friction condition data (step 602). The landing surface friction condition data includes a friction level of a landing surface that corresponds to a range of friction coefficients, where a friction coefficient is the ratio of the friction force to normal force on a landing surface. The landing surface friction condition may be provided by nearby aircraft, air traffic control, and/or aviation support personnel with access to the appropriate data and communication equipment using a compatible protocol. In addition to the landing surface friction condition, the received data may also include a landing surface or runway identifier, an aircraft model identifier, and/or other data to distinguish parameters used in calculations of a landing surface friction condition. For example, a runway identifier received by Aircraft X is used to ensure that the landing surface friction condition received is applicable to the particular runway at a particular airport that Aircraft X will use for landing. In addition, an aircraft model identifier may be received by Aircraft X and compared to the model of Aircraft X to interpret whether the friction calculations are applicable to an aircraft of the same size, weight, mass, and/or other parameters particular to Aircraft X.

Next, the process 600 computes a required landing distance, based on the received landing surface friction condition data (step 604). Generally, a manufacturer of the aircraft provides a table and/or formula for use in computing landing distance. Use of the table or formula requires data such as aircraft weight, braking action level, approach speed, and the like.

The landing surface friction condition affects the required landing distance for a particular model of aircraft. For example, Runway A may be long enough for Aircraft X to land when Runway A has a dry surface (e.g., a lot of friction requiring a shorter landing distance for an aircraft). However, if Runway A is wet, icy, or contaminated with other material affecting the runway friction condition, a longer landing distance may be required. Depending on other factors particular to Aircraft X (e.g., weight, mass, size, etc.), Runway A may be too short for Aircraft X to land safely.

Once the required landing distance has been computed (step 604), the process 600 determines whether the required landing distance is greater than a maximum threshold value (step 606). Generally, the maximum threshold value represents a distance value at which an aircraft must complete the landing process if using a particular landing surface. In certain embodiments, the maximum threshold value is the length of a runway (or other landing surface). In some embodiments, the maximum threshold value is the length of the portion of a runway that is available for use during landing.

When the required landing distance is not greater than the maximum threshold value (the "No" branch of 606), then the process 600 ends. In this scenario, the process 600 has calculated that the aircraft may effectively land on the landing surface in question, based on the length of the identified landing surface, the identified model of the aircraft, and the received landing surface friction condition of the identified landing surface.

However, when the required landing distance is greater than the maximum threshold value (the "Yes" branch of 606), then the process 600 performs a designated task (step 610). A calculated, required landing distance greater than the length of the landing surface, or the available length of the landing surface, indicates the aircraft is unable to land on the landing surface for which the landing surface friction condition is currently applicable.

In certain embodiments, the designated task includes generating an alert or notification to inform flight crew members of the required landing distance and the available length of the landing surface. In some embodiments, the generated alert may include a visual and/or auditory alert. For example, a lamp in the cockpit of an aircraft may light up with a text message, such as "Caution: Short Runway". In another example, an auditory alert may be presented, stating "Caution: Short Runway". In this case, the process 600 is informing the flight crew that the landing surface is not long enough, or in other words, that the required landing distance is greater than the length of the landing surface available for landing purposes.

In certain embodiments, the designated task includes computing a required braking action, based on the required landing distance and the received landing surface friction condition, which indicates a braking condition at which the particular aircraft may land safely on the landing surface in question. Generally, the process 600 communicates the required braking action in the form of a visual and/or auditory alert, as discussed previously. In some embodiments, the generated alert may include a text and/or auditory message stating "Brake Action: Medium", indicating that for the given landing surface friction condition, landing surface length, and model of aircraft, a medium-level brake setting on the automatic braking system (ABS) is required to stop the aircraft before the end of the landing surface. It should be appreciated that a presented text and/or auditory message may include instructions to utilize varying degrees of braking action, to include low, medium, or high settings standard in automatic braking systems (ABS) on aircraft. In some embodiments, instructions may include other braking instructions. Further, in certain embodiments, the process 600 initiates the required braking action directly, using the braking system on the aircraft.

The received broadcast landing surface friction condition may be presented to a flight crew utilizing existing Navigation/Cockpit Display of Traffic Information (CDTI) displays. In certain embodiments, the visual and/or auditory alert is presented using an existing Terrain Awareness Warning System (TAWS), or more specifically, an Enhanced Ground Proximity Warning System (EGPWS). Alternatively, the received broadcast landing surface friction condition may be presented to tower personnel and/or other aviation personnel using appropriate displays or other visual and/or auditory equipment.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "processor-readable medium" or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like.

Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module.

Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

## Claims

1. A diagnostic method performed onboard an aircraft, the method comprising:
obtaining aircraft state data during landing of the aircraft, via a plurality of avionics and aircraft systems; and
determining a landing surface friction condition based on the aircraft state data, using at least one of the plurality of avionics and aircraft systems.

2. The method of Claim 1, further comprising:
broadcasting the landing surface friction condition within a wireless range of the aircraft, for a time period of interest;
wherein the broadcasting step utilizes a communication protocol accessible to a second aircraft located in the wireless range of the aircraft during the time period of interest.

3. The method of Claim 2, wherein the broadcasting step further comprises:
broadcasting the landing surface friction condition using Automatic Dependent Surveillance-Broadcast (ADS-B) datalink technology.

4. The method of Claim 1, further comprising:
transmitting the landing surface friction condition within a wireless range of the aircraft, for a time period of interest;
wherein the transmitting step utilizes a communication protocol accessible to one or more communication receivers located in the wireless range of the aircraft during the time period of interest.

5. The method of Claim 4, further comprising:
receiving a request to provide the landing surface friction condition; and
transmitting the landing surface friction condition in response to the received request.

6. The method of Claim 1, wherein the aircraft state data comprises a flap setting, a spoiler setting, an angle of attack, an engine rotor speed, a throttle setting, a reverser setting, an acceleration value, an air speed value, and a braking input value.

7. The method of Claim 1, further comprising:
calculating a thrust value, a drag value, a lift value, and a wheel brake force value, based on the obtained aircraft state data and a plurality of known parameters, wherein the plurality of known parameters comprises at least an aircraft mass value, a wing area, and an air density value;
wherein the determining step is further based on the thrust value, the drag value, the lift value, and the wheel brake force value.

8. The method of Claim 7, wherein the calculating step further comprises computing a friction coefficient using the wheel brake force value and a net normal force to the runway; and
obtaining a braking input value;
wherein the net normal force comprises a weight of the aircraft offset by the lift value.

9. The method of Claim 8, wherein the landing surface friction condition comprises at least the computed friction coefficient.

10. The method of Claim 8, wherein the calculating step further comprises performing a lookup, using the computed friction coefficient and the obtained braking input value, to determine the landing surface friction condition.

11. A method of evaluating landing surface data onboard an aircraft, the method comprising:
receiving landing surface friction condition data, prior to landing;
computing a required landing distance, based on the received landing surface friction condition data; and
when the required landing distance is more than a predetermined threshold, performing a designated task.

12. The method of Claim 11, wherein performing the designated task comprises presenting an alert; and
wherein the presented alert comprises a visual notification.

13. The method of Claim 11, wherein performing the designated task comprises presenting an alert; and
wherein the presented alert comprises an auditory notification.

14. The method of Claim 11, wherein performing the designated task comprises:
computing a required braking action, based on the required landing distance and the received landing surface friction condition data; and
presenting an alert indicating the required braking action.

15. The method of Claim 11, wherein performing the designated task comprises:
computing a required braking action, based on the required landing distance and the received landing surface friction condition data; and
initiating the required braking action on the aircraft.
